# EUROPEAN PATENT APPLICATION

(11) **EP 4 421 957 A1**
(43) Date of publication of application: **28.08.2024**
(21) Application number: 21960958.3
(22) Date of filing: 21.10.2021
(51) Int. Cl.: H01M 50/244, H01M 50/231, H01M 10/613, H01M 50/249, H01M 10/6551, H01M 10/625, H01M 50/258

(54) **PACKAGING SHEET FOR POWER BATTERY OF NEW ENERGY VEHICLE, POWER BATTERY ASSEMBLY OF NEW ENERGY VEHICLE AND DISASSEMBLING METHOD OF POWER BATTERY ASSEMBLY OF NEW ENERGY VEHICLE**

(71) Applicant: 3M Innovative Properties Company, Saint Paul, Minnesota 55133-3427 (US)
(72) Inventor: ZHANG, Yunshu, Shanghai 200233 (CN); JIN, Zhou, Shanghai 200233 (CN); YU, Xuetao, Shanghai 200233 (CN); WU, Shuang, Shanghai 200233 (CN)
(74) Representative: Mathys & Squire
(86) International application number: PCT/CN2021/125252
(87) International publication number: WO 2023/065208

(57) **Abstract**

The present invention provides a packaging sheet for a power battery of a new energy vehicle, a power battery assembly of a new energy vehicle, and a method for disassembling the power battery assembly of a new energy vehicle. The packaging sheet comprises a functional layer, the functional layer comprises a thermoplastic polymer, and the thermoplastic polymer has a glass transition temperature in a range of 40°C to 67°C and a number-average molecular weight in a range of 10000 to 23000. According to the present invention, the packaging sheet for packaging a power battery of a new energy vehicle is simple in structure and easy to disassemble, and the obtained power battery assembly of a new energy vehicle is simple in structure, light in weight and high in battery volume ratio, and in particular, can be disassembled through a very simple process, thereby greatly improving the efficiency of updating and repairing new energy vehicle power batteries for electric vehicles.

## Description

### TECHNICAL FIELD

The present invention relates to the field of new energy vehicle power batteries for electric vehicles, and particularly provides a packaging sheet suitable for a power battery of a new energy vehicle, a power battery assembly of a new energy vehicle, and a method for disassembling the power battery assembly of a new energy vehicle.

### BACKGROUND ART

With the rapid development of the global electric vehicle market, a packaging technology for power batteries of new energy vehicles has gradually become a research hotspot aimed at improving the mileage and safety of electric vehicles. At present, the mainstream design of battery packs includes one container and several battery modules, one of the battery modules including several battery cells. Cross beams, longitudinal beams, side beams and a bottom plate are disposed in a box body of the container for tightly fixing the battery modules together. However, the above packaging design shows the following obvious disadvantages: the existence of the cross beams causes the volumetric efficiency of the box body to at most be 40%, which limits the number of battery modules contained inside, thus further limiting the mileage of an electric vehicle; a large number of fasteners (such as screws) fix the battery modules onto the cross beams, and these fasteners, the cross beams, the longitudinal beams, the side beams and the bottom plate increase the weight of the box body; and design and manufacturing processes of the battery pack are complicated.

In order to overcome the above disadvantages, the process that has been gradually adopted is to directly fix a battery or battery module onto a cooling plate by using a heat-conducting structural adhesive. Compared with metal mechanical fasteners, the use of the heat-conducting structural adhesive, which also serves as an organic structural adhesive, greatly reduces the weight and operation is easier. According to this process, the volumetric efficiency of the box body can be increased to more than 60%.

However, although the above design improves the volumetric efficiency of the battery pack and reduces its weight, the disadvantage of the above method is that the battery pack is difficult to disassemble. This is because the heat-conducting structural adhesive that is currently used has very high adhesive strength to firmly bond all units of the battery pack together, thus being sufficient to withstand all potential failure modes. During use, once a certain battery cell fails, it is difficult to disassemble the battery pack to remove the faulty battery cell.

Therefore, it is of great significance to develop a packaging sheet for a power battery of a new energy vehicle, which is simple in structure and easy to disassemble, and a power battery pack product of a new energy vehicle, which is simple in structure, light in weight, high in battery volume ratio and especially easy to disassemble.

### SUMMARY

In view of the technical problems described above, the purpose of the present invention is to provide a packaging sheet for a power battery of a new energy vehicle, which is simple in structure and easy to disassemble, a power battery assembly of a new energy vehicle, which is simple in structure, light in weight, high in battery volume ratio and especially easy to disassemble, and a method for disassembling the power battery assembly of a new energy vehicle.

The inventors of the present invention have completed the present invention through in-depth and meticulous research.

According to one aspect of the present invention, there is provided a packaging sheet for a power battery of a new energy vehicle, where the packaging sheet comprises a functional layer, the functional layer comprises a thermoplastic polymer, and the thermoplastic polymer has a glass transition temperature in a range of 40°C to 67°C and a number-average molecular weight in a range of 10000 to 23000.

According to another aspect of the present invention, there is provided a power battery assembly of a new energy vehicle, where the power battery assembly of a new energy vehicle comprises:
a battery module;
a heat-conducting structural adhesive layer in contact with the battery module;
a functional layer in contact with the heat-conducting structural adhesive layer; and
a cooling plate adjacent to the functional layer, where
the functional layer comprises a thermoplastic polymer, and the thermoplastic polymer has a glass transition temperature in a range of 40°C to 67°C and a number-average molecular weight in a range of 10000 to 23000.

According to another aspect of the present invention, there is provided a method for disassembling the above-mentioned power battery assembly of a new energy vehicle, where the method comprises:
heating the cooling plate to a range of 70°C to 100°C; and
separating the heat-conducting structural adhesive layer from the cooling plate.

Compared with the prior art in the present field, the present invention has the following advantages: the packaging sheet for a power battery of a new energy vehicle is simple in structure and easy to disassemble, and can be used for packaging a power battery of a new energy vehicle; and the obtained power battery assembly of a new energy vehicle is simple in structure, light in weight and high in battery volume ratio; and in particular, the power battery assembly of a new energy vehicle according to the present invention can be disassembled through a very simple process, thereby greatly improving the efficiency of updating and repairing power batteries of new energy vehicles.

### BRIEF DESCRIPTION OF THE DRAWINGS

The accompanying drawings, which are incorporated herein and constitute part of this specification, illustrate exemplary embodiments of the present invention, and, together with the general description provided above and the detailed description provided below, serve to explain the functions of features of the present invention.
FIG. 1 shows a schematic cross-sectional view of a packaging sheet for a power battery of a new energy vehicle according to one embodiment of the present invention;
FIG. 2 shows a schematic cross-sectional view of a part of a power battery assembly of a new energy vehicle according to one embodiment of the present invention; and
FIG. 3 shows a schematic cross-sectional view of a part of a power battery assembly of a new energy vehicle according to another embodiment of the present invention.

### DETAILED DESCRIPTION

It should be appreciated that a person skilled in the art could devise various other implementation schemes based on the teachings of this specification and modify these without departing from the scope or spirit of the present disclosure. Therefore, the following particular embodiments have no limiting meaning.

Unless otherwise specified, all numbers used in this specification and the claims representing the characteristic sizes and quantities and physical properties should be understood as being modified by the term "approximately" under any and all circumstances. Therefore, unless indicated to the contrary, parameters in numerical values listed in the above specification and the attached claims are all approximate values, and those of skill in the art would be capable of seeking to obtain desired properties by taking advantage of the teachings disclosed herein, and changing these approximate values appropriately. The use of a numerical range represented by end points includes all numbers within such range and any range within the range. For example, 1 to 5 includes 1, 1.1, 1.3, 1.5, 2, 2.75, 3, 3.80, 4, and 5, etc.

Through research, the inventors of the present invention found that easy disassembly of a power battery of a new energy vehicle can be realized by introducing a functional layer with specific structural characteristics between a cooling plate and a heat-conducting structural adhesive which has gluing and heat conduction effects in a power battery pack of a new energy vehicle. Specifically, good adhesion and high modulus exist between a thermoplastic polymer in the functional layer and the heat-conducting structural adhesive and between the thermoplastic polymer and the cooling plate below the normal working temperature (about 55°C) of the power battery of a new energy vehicle, so that firm assembly of the power battery of a new energy vehicle can be realized. In another aspect, when the functional layer is heated to a certain temperature, the functional layer undergoes a transition from a glass state to a rubber state, cohesive failure occurs and thus the functional layer becomes soft, which is convenient to separate the heat-conducting structural adhesive layer from the cooling plate, so that the power battery assembly of a new energy vehicle can be easily disassembled.

Specifically, according to one aspect of the present invention, there is provided a packaging sheet for a power battery of a new energy vehicle, where the packaging sheet comprises a functional layer, the functional layer comprises a thermoplastic polymer, and the thermoplastic polymer has a glass transition temperature in a range of 40°C to 67°C and a number-average molecular weight in a range of 10000 to 23000.

The packaging sheet for a power battery of a new energy vehicle according to the present invention comprises the functional layer. When the packaging sheet is used for packaging a power battery, by introducing the functional layer between a heat-conducting structural adhesive layer and a cooling plate in a power battery pack, the power battery pack can be easily disassembled when faulty battery components need to be removed. Specifically, good adhesion and high modulus exist between a thermoplastic polymer in the functional layer and the heat-conducting structural adhesive and between the thermoplastic polymer and the cooling plate at room temperature and below the normal working temperature (about 55°C) of the power battery, so that firm assembly of the power battery pack can be realized. In another aspect, when the functional layer is heated to a certain temperature, the functional layer undergoes a transition from a glass state to a rubber state, cohesive failure occurs and thus the functional layer becomes soft, which is convenient to separate the heat-conducting structural adhesive layer from the cooling plate, so that the power battery assembly can be conveniently disassembled. According to a technical solution of the present invention, the functional layer comprises a thermoplastic polymer, and the thermoplastic polymer has a glass transition temperature in a range of 40°C to 67°C and a number-average molecular weight in a range of 10000 to 23000. The inventors of the present invention found that when the glass transition temperature of the thermoplastic polymer is lower than 40°C, the adhesion of the thermoplastic polymer at room temperature and the normal working temperature (about 55°C) of the power battery of a new energy vehicle is insufficient, and it is impossible to achieve effective adhesion and assembly of components in the power battery assembly of a new energy vehicle. In another aspect, when the glass transition temperature of the thermoplastic polymer is higher than 67°C, the adhesion of the thermoplastic polymer becomes too high, and even if the cooling plate is heated to a disassembly temperature higher than 80°C, effective separation between the heat-conducting structural adhesive layer and the cooling plate cannot be realized, while the disassembly temperature higher than 80°C, especially higher than 100°C, may cause an internal battery module to be damaged by heat. Furthermore, the inventors of the present invention found that when the number-average molecular weight of the thermoplastic polymer is less than 10000, even if its glass transition temperature is in the range of 40°C to 67°C, the adhesion of the thermoplastic polymer at room temperature and the normal working temperature (about 55°C) of the power battery of a new energy vehicle is insufficient and it is impossible to achieve effective adhesion and assembly of the components in the power battery assembly of a new energy vehicle. In another aspect, when the number-average molecular weight of the thermoplastic polymer is higher than 23000, even if its glass transition temperature is in the range of 40°C to 67°C, the adhesion of the thermoplastic polymer is also too high, and the effective separation between the heat-conducting structural adhesive layer and the cooling plate cannot be achieved even by heating the cooling plate to a temperature higher than 80°C. According to the technical solution of the present invention, the thickness of the functional layer is in a range of 10 µm to 100 m. When the thickness of the functional layer is less than 10 µm, it is impossible to achieve effective adhesion of the adjacent heat-conducting structural adhesive layer and the cooling plate; in another aspect, when the thickness of the functional layer is greater than 100 µm, a heat conductivity coefficient between adjacent battery modules is clearly reduced. Preferably, the thermoplastic polymer comprises one or more among thermoplastic copolyester, thermoplastic polyacrylate, thermoplastic polyamide, thermoplastic polyimide, thermoplastic polyether and thermoplastic rubber, etc. Preferably, the thermoplastic polymer comprises one or more among thermoplastic copolyester and thermoplastic polyacrylate. Preferably, the thermoplastic copolyester is a high-molecular compound generated by a condensation polymerization reaction of polyhydric alcohol and polybasic acid, and the thermoplastic polyacrylate is a high-molecular compound generated by addition polymerization of one or more acrylate monomers. Thermoplastic copolyesters and thermoplastic polyacrylates that can be used in the present invention can be prepared according to known synthesis methods or can be directly commercially obtained. For example, specific examples of thermoplastic copolyesters and thermoplastic polyacrylates that can be used in the present invention include: AH 645 (Tg = 67°C; Mₙ = 15000), AH 441 (Tg = 40°C; Mₙ = 12000), AH 550 (Tg = 53°C; Mₙ = 21000), and AH 469 (Tg = 48°C; Mₙ = 23000) produced by Suzhou Marcoocean New Material Co., Ltd., and BM 52 (Tg = 60°C; Mₙ = 23000) produced by Shanghai Pioneer Chemicals Co., Ltd.

Preferably, the packaging sheet further comprises an insulating layer laminated with the functional layer. The insulating layer can provide an excellent electrical insulation effect for the power battery assembly of a new energy vehicle obtained by the packaging sheet. There is no particular limitation on a specific material constituting the insulating layer, and said material can be appropriately selected from insulating materials commonly used in the field of power batteries of new energy vehicles, as long as the material has an excellent electrical insulation property and has excellent adhesion to the functional layer and the cooling plate. Preferably, the insulating material constituting the insulating layer is an epoxy-based insulating material. Preferably, the thickness of the insulating layer is in a range of 25 µm to 50 µm.

Preferably, the packaging sheet further comprises a thermosetting polymer layer laminated with the insulating layer on the side opposite to the functional layer. The thermosetting polymer layer is adhered to the cooling plate by a hot pressing process when the power battery of a new energy vehicle is packaged. There are no special restrictions on the specific type of the thermosetting polymer that can be used, and it can be routinely selected from various thermosetting materials conventionally used in the field of power batteries of new energy vehicles. Furthermore, there is no requirement for the thickness of the thermosetting polymer layer as long as it can ensure firm adhesion of the packaging sheet to the cooling plate.

According to a preferred embodiment of the present invention, the packaging sheet further comprises a release layer laminated with the functional layer on the side opposite to the insulating layer.

According to a preferred embodiment of the present invention, the packaging sheet further comprises a cooling plate laminated with the thermosetting polymer layer on the side opposite to the functional layer.

The packaging sheet according to the present invention may include a cooling plate serving as an outermost structure. The cooling plate can provide heat dissipation and protection for internal components of the battery pack. According to a preferred embodiment of the present invention, the cooling plate is directly adhered to the functional layer. According to a preferred embodiment of the present invention, the cooling plate is laminated with the insulating layer on the side opposite to the functional layer. According to a preferred embodiment of the present invention, the cooling plate is laminated with the thermosetting polymer layer on the side opposite to the functional layer.

Preferably, the cooling plate is a metal plate. More preferably, the cooling plate is an aluminum plate. According to a preferred embodiment of the present invention, the cooling plate comprises one or more pipes. The one or more pipes can circulate a circulating medium (for example, water) to cool the power battery assembly by circulating cooling water when heat dissipation is needed, and to soften the functional layer by circulating hot water when the power battery assembly needs to be disassembled. Preferably, the one or more pipes are circulating pipes located inside the cooling plate.

Preferably, the packaging sheet for a power battery of a new energy vehicle according to the present invention comprises only the functional layer.

Preferably, the packaging sheet for a power battery of a new energy vehicle according to the present invention comprises a functional layer and a cooling plate that are laminated together.

Preferably, the packaging sheet for a power battery of a new energy vehicle according to the present invention comprises a functional layer and an insulating layer that are laminated together.

Preferably, the packaging sheet for a power battery of a new energy vehicle according to the present invention comprises a functional layer, an insulating layer and a cooling plate that are sequentially laminated together.

Preferably, the packaging sheet for a power battery of a new energy vehicle according to the present invention comprises a functional layer, an insulating layer and a thermosetting polymer layer that are sequentially laminated.

Preferably, the packaging sheet for a power battery of a new energy vehicle according to the present invention comprises a release layer, a functional layer, an insulating layer and a thermosetting polymer layer that are sequentially laminated.

Preferably, the packaging sheet for a power battery of a new energy vehicle according to the present invention comprises a release layer, a functional layer, an insulating layer, a thermosetting polymer layer and a cooling plate that are sequentially laminated.

Optionally, the insulating layer and the thermosetting polymer layer may also be located on the side of the functional layer opposite to the cooling plate. For example, the packaging sheet for a power battery of a new energy vehicle according to the present invention comprises a release layer, an insulating layer, a thermosetting polymer layer, a functional layer and a cooling plate that are sequentially laminated, or comprises a release layer, a thermosetting polymer layer, an insulating layer, a functional layer and a cooling plate that are sequentially laminated. However, preferably, the insulating layer is located on the side of the functional layer close to the cooling plate, so as to provide a good insulation effect for various components integrally packaged inside. Furthermore, the thermosetting polymer layer is also located on the side of the functional layer close to the cooling plate, so as to attach the whole internal packaging structure to the cooling plate through the thermosetting polymer layer via a hot pressing process during manufacturing.

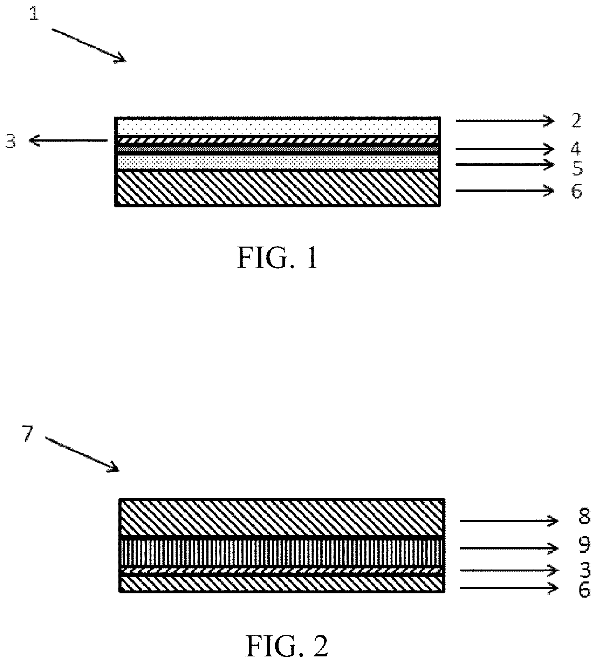

FIG. 1 shows a schematic cross-sectional view of a packaging sheet 1 for a power battery of a new energy vehicle according to a preferred embodiment of the present invention. As shown in FIG. 1, the packaging sheet 1 for a power battery of a new energy vehicle comprises a release layer 2, a functional layer 3, an insulating layer 4, a thermosetting polymer layer 5 and a cooling plate 6 that are sequentially laminated.

According to another aspect of the present invention, there is provided a power battery assembly of a new energy vehicle, where the power battery assembly of a new energy vehicle comprises:
a battery module;
a heat-conducting structural adhesive layer in contact with the battery module;
a functional layer in contact with the heat-conducting structural adhesive layer; and
a cooling plate adjacent to the functional layer, where
the functional layer comprises a thermoplastic polymer, and the thermoplastic polymer has a glass transition temperature in a range of 40°C to 67°C and a number-average molecular weight in a range of 10000 to 23000.

There is no particular limitation on the type of the battery module that can be used in the power battery assembly of a new energy vehicle according to the present invention, and it can be any type of battery module currently used in the field of electric vehicles, including a lithium-ion power battery, a lithium iron phosphate power battery and the like. Optionally, the power battery assembly of a new energy vehicle according to the present invention may include one or more battery modules, where the one battery module is encapsulated by the heat-conducting structural adhesive, or the plurality of battery modules are separated from each other by the heat-conducting structural adhesive and integrally encapsulated.

The power battery assembly of a new energy vehicle according to the present invention comprises a heat-conducting structural adhesive layer in contact with the battery module. One purpose of using the heat-conducting structural adhesive layer is to serve as a structural adhesive to firmly bond adjacent battery modules together, and another purpose is to effectively conduct heat generated by batteries between the adjacent battery modules. There is no particular limitation on the specific type of the heat-conducting structural adhesive that can be used in the power battery assembly of a new energy vehicle according to the present invention, and the adhesive can be prepared according to known methods or can be directly commercially obtained. For example, an exemplary product of a heat-conducting structural adhesive that can be used include: a heat-conducting structural adhesive TC 7000 produced by 3M Company. The thickness of the heat-conducting structural adhesive layer is in a range of 0.5 mm to 2 mm. When the thickness of the heat-conducting structural adhesive layer is less than 0.5 mm, effective adhesion between adjacent battery modules cannot be achieved, while when the thickness of the heat-conducting structural adhesive layer is greater than 2 mm, the heat conductivity coefficient between adjacent battery modules will be clearly reduced.

The power battery assembly of a new energy vehicle according to the present invention comprises the functional layer which is in contact with the heat-conducting structural adhesive layer and is adjacent to the cooling plate. By introducing the functional layer between the heat-conducting structural adhesive layer and the cooling plate in the power battery pack, the power battery pack can be easily disassembled when faulty battery components need to be removed. Specifically, good adhesion and high modulus exist between a thermoplastic polymer in the functional layer and the heat-conducting structural adhesive and between the thermoplastic polymer and the cooling plate at room temperature and below the normal working temperature (about 55°C) of the power battery of a new energy vehicle, so that firm assembly of the power battery pack can be realized. In another aspect, when the functional layer is heated to a certain temperature, the functional layer undergoes a transition from a glass state to a rubber state, cohesive failure occurs and thus the functional layer becomes soft, which is convenient to separate the heat-conducting structural adhesive layer from the cooling plate, so that the power battery assembly of a new energy vehicle can be conveniently disassembled. According to a technical solution of the present invention, the functional layer comprises a thermoplastic polymer, and the thermoplastic polymer has a glass transition temperature in a range of 40°C to 67°C and a number-average molecular weight in a range of 10000 to 23000. The inventors of the present invention found that when the glass transition temperature of the thermoplastic polymer is lower than 40°C, the adhesion of the thermoplastic polymer at room temperature and the normal working temperature (about 55°C) of the power battery of a new energy vehicle is insufficient, and it is impossible to achieve effective adhesion and assembly of components in the power battery assembly of a new energy vehicle. In another aspect, when the glass transition temperature of the thermoplastic polymer is higher than 67°C, the adhesion of the thermoplastic polymer becomes too high, and even if the cooling plate is heated to a disassembly temperature higher than 80°C, effective separation between the heat-conducting structural adhesive layer and the cooling plate cannot be realized, while the disassembly temperature higher than 80°C, especially higher than 100°C, may cause an internal battery module to be damaged by heat. Furthermore, the inventors of the present invention found that when the number-average molecular weight of the thermoplastic polymer is less than 10000, even if its glass transition temperature is in the range of 40°C to 67°C, the adhesion of the thermoplastic polymer at room temperature and the normal working temperature (about 55°C) of the power battery of a new energy vehicle is insufficient and it is impossible to achieve effective adhesion and assembly of the components in the power battery assembly of a new energy vehicle. In another aspect, when the number-average molecular weight of the thermoplastic polymer is higher than 23000, even if its glass transition temperature is in the range of 40°C to 67°C, the adhesion of the thermoplastic polymer is also too high, and the effective separation between the heat-conducting structural adhesive layer and the cooling plate cannot be achieved even by heating the cooling plate to a temperature higher than 80°C. According to the technical solution of the present invention, the thickness of the functional layer is in a range of 10 µm to 100 m. When the thickness of the functional layer is less than 10 µm, it is impossible to achieve effective adhesion of the adjacent heat-conducting structural adhesive layer and the cooling plate; in another aspect, when the thickness of the functional layer is greater than 100 µm, a heat conductivity coefficient between adjacent battery modules is clearly reduced. Preferably, the thermoplastic polymer comprises one or more among thermoplastic copolyester, thermoplastic polyacrylate, thermoplastic polyamide, thermoplastic polyimide, thermoplastic polyether and thermoplastic rubber, etc. Preferably, the thermoplastic polymer comprises one or more among thermoplastic copolyester and thermoplastic polyacrylate. Preferably, the thermoplastic copolyester is a high-molecular compound generated by a condensation polymerization reaction of polyhydric alcohol and polybasic acid, and the thermoplastic polyacrylate is a high-molecular compound generated by addition polymerization of one or more acrylate monomers. Thermoplastic copolyesters and thermoplastic polyacrylates that can be used in the present invention can be prepared according to known synthesis methods or can be directly commercially obtained. For example, specific examples of thermoplastic copolyesters and thermoplastic polyacrylates that can be used in the present invention include: AH 645 (Tg = 67°C; Mₙ = 15000), AH 441 (Tg = 40°C; Mₙ = 12000), AH 550 (Tg = 53°C; Mₙ = 21000), and AH 469 (Tg = 48°C; Mₙ = 23000) produced by Suzhou Marcoocean New Material Co., Ltd., and BM 52 (Tg = 60°C; Mₙ = 23000) produced by Shanghai Pioneer Chemicals Co., Ltd.

Preferably, when the thermoplastic polymer constituting the functional layer has an excellent electrical insulation property, the functional layer is directly in contact with the cooling plate.

The power battery assembly of a new energy vehicle of the present invention comprises a cooling plate serving as an outermost structure. The cooling plate can provide heat dissipation and protection for internal components. Preferably, the cooling plate is a metal plate. More preferably, the cooling plate is an aluminum plate. According to a preferred embodiment of the present invention, the cooling plate comprises one or more pipes. The one or more pipes can circulate a circulating medium (for example, water) to cool the power battery assembly of a new energy vehicle by circulating cooling water when heat dissipation is needed, and to soften the functional layer by circulating hot water when the power battery assembly needs to be disassembled. Preferably, the one or more pipes are circulating pipes located inside the cooling plate.

FIG. 2 shows a schematic cross-sectional view of a part of a power battery assembly 7 of a new energy vehicle according to one embodiment of the present invention. The power battery assembly 7 of a new energy vehicle comprises: a battery module 8; a heat-conducting structural adhesive layer 9 in contact with the battery module 8; a functional layer 3 in contact with the heat-conducting structural adhesive layer 9; and a cooling plate 6 adjacent to the functional layer 3.

According to a preferred embodiment of the present invention, the power battery assembly of a new energy vehicle further comprises an insulating layer between the functional layer and the cooling plate and/or between the functional layer and the battery module. The insulating layer can provide an excellent electrical insulation effect for the power battery assembly of a new energy vehicle. There is no particular limitation on a specific material constituting the insulating layer, and said material can be appropriately selected from the insulating materials commonly used in the field of power batteries of new energy vehicles, as long as the material has an excellent electrical insulation property and has excellent adhesion to the functional layer and the cooling plate. Preferably, the insulating material constituting the insulating layer is an epoxy-based insulating material. Preferably, the thickness of the insulating layer is in a range of 25 µm to 50 µm.

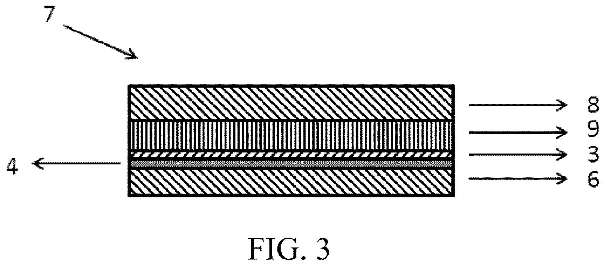

FIG. 3 shows a schematic cross-sectional view of a part of a power battery assembly 7 of a new energy vehicle according to another embodiment of the present invention. The power battery assembly 7 of a new energy vehicle comprises: a battery module 8, a heat-conducting structural adhesive layer 9, a functional layer 3, an insulating layer 4 and a cooling plate 6 that are sequentially in contact with each other.

According to another aspect of the present invention, there is provided a method for disassembling the above-mentioned power battery assembly of a new energy vehicle, where the method comprises:
heating the cooling plate to a range of 70°C to 100°C, preferably 70°C to 80°C; and
separating the heat-conducting structural adhesive layer from the cooling plate.

According to some embodiments of the present invention, the step of heating the cooling plate to a range of 70°C to 100°C comprises: pumping heating fluid through the circulating pipes, preferably one or more circulating pipes located inside the cooling plate. Preferably, the heating fluid is water.

Various exemplary embodiments of the present invention are further illustrated by the following list of embodiments, which should not be construed as unduly limiting the present invention:
Embodiment 1 defines a packaging sheet for a power battery of a new energy vehicle, the packaging sheet comprising a functional layer, the functional layer comprising a thermoplastic polymer, and the thermoplastic polymer having a glass transition temperature in a range of 40°C to 67°C and a number-average molecular weight in a range of 10000 to 23000.
Embodiment 2 defines the packaging sheet for a power battery of a new energy vehicle according to Embodiment 1, wherein the thickness of the functional layer is in a range of 10 µm to 100 µm.
Embodiment 3 defines the packaging sheet for a power battery of a new energy vehicle according to Embodiment 1, wherein the thermoplastic polymer comprises one or more among thermoplastic copolyester, thermoplastic polyacrylate, thermoplastic polyamide, thermoplastic polyimide, thermoplastic polyether and thermoplastic rubber.
Embodiment 4 defines the packaging sheet for a power battery of a new energy vehicle according to Embodiment 3, wherein the thermoplastic polymer comprises one or more among thermoplastic copolyester and thermoplastic polyacrylate.
Embodiment 5 defines the packaging sheet for a power battery of a new energy vehicle according to Embodiment 1, wherein the packaging sheet further comprises an insulating layer laminated with the functional layer.
Embodiment 6 defines the packaging sheet for a power battery of a new energy vehicle according to Embodiment 5, wherein the thickness of the insulating layer is in a range of 25 µm to 50 µm.
Embodiment 7 defines the packaging sheet for a power battery of a new energy vehicle according to Embodiment 5, wherein the packaging sheet further comprises a thermosetting polymer layer laminated with the insulating layer on the side opposite to the functional layer.
Embodiment 8 defines the packaging sheet for a power battery of a new energy vehicle according to Embodiment 5, wherein the packaging sheet further comprises a release layer laminated with the functional layer on the side opposite to the insulating layer.
Embodiment 9 defines the packaging sheet for a power battery of a new energy vehicle according to Embodiment 1, wherein the packaging sheet further comprises a cooling plate directly adhered to the functional layer.
Embodiment 10 defines the packaging sheet for a power battery of a new energy vehicle according to Embodiment 5, wherein the packaging sheet further comprises a cooling plate laminated with the insulating layer on the side opposite to the functional layer.
Embodiment 11 defines the packaging sheet for a power battery of a new energy vehicle according to Embodiment 7, wherein the packaging sheet further comprises a cooling plate laminated with the thermosetting polymer layer on the side opposite to the functional layer.
Embodiment 12 defines the packaging sheet for a power battery of a new energy vehicle according to any one of Embodiments 9, 10 and 11, wherein the cooling plate is a metal plate.
Embodiment 13 defines the packaging sheet for a power battery of a new energy vehicle according to Embodiment 12, wherein the cooling plate is an aluminum plate.
Embodiment 14 defines the packaging sheet for a power battery of a new energy vehicle according to any one of Embodiments 9, 10 and 11, wherein the cooling plate comprises one or more pipes.
Embodiment 15 defines the packaging sheet for a power battery of a new energy vehicle according to Embodiment 14, wherein the one or more pipes are circulating pipes located inside the cooling plate.
Embodiment 16 defines a power battery assembly of a new energy vehicle, the power battery assembly of a new energy vehicle comprising:
   a battery module;
   a heat-conducting structural adhesive layer in contact with the battery module;
   a functional layer in contact with the heat-conducting structural adhesive layer; and
   a cooling plate adjacent to the functional layer, wherein
   the functional layer comprises a thermoplastic polymer, and the thermoplastic polymer has a glass transition temperature in a range of 40°C to 67°C and a number-average molecular weight in a range of 10000 to 23000.
Embodiment 17 defines the power battery assembly of a new energy vehicle according to Embodiment 16, wherein the thickness of the functional layer is in a range of 10 µm to 100 µm.
Embodiment 18 defines the power battery assembly of a new energy vehicle according to Embodiment 16, wherein the thermoplastic polymer comprises one or more among thermoplastic copolyester, thermoplastic polyacrylate, thermoplastic polyamide, thermoplastic polyimide, thermoplastic polyether and thermoplastic rubber.
Embodiment 19 defines the power battery assembly of a new energy vehicle according to Embodiment 16, wherein the thermoplastic polymer comprises one or more among thermoplastic copolyester and thermoplastic polyacrylate.
Embodiment 20 defines the power battery assembly of a new energy vehicle according to Embodiment 16, wherein the functional layer is directly in contact with the cooling plate.
Embodiment 21 defines the power battery assembly of a new energy vehicle according to Embodiment 16, wherein the thickness of the heat-conducting structural adhesive layer is in a range of 0.5 mm to 2 mm.
Embodiment 22 defines the power battery assembly of a new energy vehicle according to Embodiment 16, wherein the cooling plate is a metal plate.
Embodiment 23 defines the power battery assembly of a new energy vehicle according to Embodiment 16, wherein the cooling plate is an aluminum plate.
Embodiment 24 defines the power battery assembly of a new energy vehicle according to Embodiment 16, wherein the cooling plate comprises one or more pipes.
Embodiment 25 defines the power battery assembly of a new energy vehicle according to Embodiment 24, wherein the one or more pipes are circulating pipes located inside the cooling plate.
Embodiment 26 defines the power battery assembly of a new energy vehicle according to Embodiment 16, wherein the power battery assembly of a new energy vehicle further comprises an insulating layer between the functional layer and the cooling plate or/and an insulating layer between the functional layer and the battery module.
Embodiment 27 defines the power battery assembly of a new energy vehicle according to Embodiment 26, wherein the thickness of the insulating layer is in a range of 25 µm to 50 µm.
Embodiment 28 defines a method for disassembling the power battery assembly of a new energy vehicle, the method comprising:
   heating the cooling plate to a range of 70°C to 100°C; and
   separating the heat-conducting structural adhesive layer from the cooling plate.
Embodiment 29 defines the method for disassembling the power battery assembly of a new energy vehicle according to Embodiment 28, wherein the step of heating the cooling plate to a range of 70°C to 100°C comprises:
   pumping a heating fluid through the circulating pipes.
Embodiment 30 defines the method for disassembling the power battery assembly of a new energy vehicle according to Embodiment 29, wherein the heating fluid is water.

The present invention will be described in more detail with examples. It is to be noted that the description and examples are intended to facilitate the understanding of the present invention, and are not intended to limit the present invention. The scope of protection of the present invention is subject to the appended claims.

### Examples

In the present invention, unless otherwise indicated, all reagents used were commercially available and were used without further purification treatment. Furthermore, the "parts" mentioned are "parts by weight".

### Test method

### Dynamic shear strength (MPa)

Dynamic shear properties of assembly samples obtained in the following Examples and Comparative Examples were tested. Specifically, the assembly samples obtained in the following Examples and Comparative Examples were divided into three parts on average, and dynamic shear strength (MPa) of the samples was measured according to the GB/T 33332-2016 standard, by a tensile testing machine (model Instron 5942) produced by Instron Company, at 25°C (i.e., room temperature), 55°C (i.e., general service temperature of a power battery of a new energy vehicle) and 80°C (i.e., disassembly temperature) respectively. The test results are shown in Table 2 below.

With regard to the dynamic shear strength (MPa) measured at different temperatures, in order to ensure that the functional layer has good adhesion to both the heat-conducting structural adhesive layer and the cooling plate such that all components of a battery pack can be firmly adhered to each other during use, both of the dynamic shear strength at 25°C (i.e., room temperature) and the dynamic shear strength at 55°C (i.e., general service temperature of a power battery of a new energy vehicle) need to be greater than 2.2 MPa. In addition, in order to achieve the purpose of easy disassembly of the assembly, the dynamic shear strength at 80°C (i.e., disassembly temperature) needs to be less than 0.8 MPa.

Reagents used in the following Examples and Comparative Examples are specifically listed in Table 1 below:

**Table 1**

| Component | Trade name | Supplier |
|---|---|---|
| Heat-conducting structural adhesive | TC 7000 | 3M Company |
| Thermoplastic polymer | AH 645 (Tg = 67°C; Mₙ = 15000) | Suzhou Marcoocean New Material Co., Ltd. |
| | AH 441 (Tg = 40°C; Mₙ = 12000) | Suzhou Marcoocean New Material Co., Ltd. |
| | AH 550 (Tg = 53°C; Mₙ = 21000) | Suzhou Marcoocean New Material Co., Ltd. |
| | AH 469 (Tg = 48°C; Mₙ =23000) | Suzhou Marcoocean New Material Co., Ltd. |
| | BM 52 (Tg = 60°C; Mₙ = 23000) | Shanghai Pioneer Chemicals Co., Ltd. |
| | AH 353 (Tg = 32°C; Mₙ = 16000) | Suzhou Marcoocean New Material Co., Ltd. |
| | AH 750 (Tg = 70°C; Mₙ = 22000) | Suzhou Marcoocean New Material Co., Ltd. |
| | MB-6-1 (Tg = 60°C; Mₙ = 67000) | Shanghai Pioneer Chemicals Co., Ltd. |
| | BM 260 (Tg = 50°C; Mₙ = 9000) | Shanghai Pioneer Chemicals Co., Ltd. |

### Example 1 (E1)

30 g of thermoplastic polymer AH 645 was dissolved in 70 g of methyl vinyl ketone to prepare a thermoplastic polymer solution. Then, the thermoplastic polymer solution was dropwise added to a surface of an aluminum plate (size: 4 inches × 1 inch × 0.0625 inches), the drops flowed smoothly and drying at room temperature was performed. The thickness of a functional layer formed on the aluminum plate was 30 µm.

In addition, a high-strength heat-conducting structural adhesive TC 7000 produced by 3M Company was evenly coated on the functional layer of the aluminum plate prepared above. Subsequently, another aluminum plate (size: 4 inches × 1 inch × 0.0625 inches) covered a formed heat-conducting structural adhesive layer, so that an overlapping area was 0.5 square inches and the thickness of the heat-conducting structural adhesive layer was controlled. The obtained assembly was cured at room temperature for 3 days to obtain an assembly sample 1. The thickness of the heat-conducting structural adhesive layer in the assembly sample 1 cured at room temperature was 1 mm.

Then, the assembly sample 1 was tested according to the method for measuring the dynamic shear strength (MPa) as described in detail above. The test results are shown in Table 2 below.

### Examples 2-14 (E2-E14) and Comparative Examples 1-6 (CE1-CE6)

Assembly samples 2-14 and comparative assembly samples 1-6 were prepared in a similar manner to Example 1, except that specific types of thermoplastic polymers and the thicknesses of the formed functional layers were changed as shown in Table 2 below. In Example 3, a mixture of AH 645 and AH 441 with a weight ratio of 7:3 was used to replace the thermoplastic polymer AH 645 of equal weight. In Example 4, a mixture of AH 645 and AH 441 with a weight ratio of 3:7 was used to replace the thermoplastic polymer AH 645 of equal weight. In Comparative Example 3, a mixture of AH 645 and AH 750 with a weight ratio of 6:4 was used to replace the thermoplastic polymer AH 645 of equal weight. In Comparative Example 4, a mixture of AH 441 and AH 353 with a weight ratio of 8:2 was used to replace the thermoplastic polymer AH 645 of equal weight.

Then, the assembly samples 2-14 and comparative assembly samples 1-6 were each tested according to the method for measuring the dynamic shear strength (MPa) described in detail above. The test results are shown in Table 2 below.

**Table 2 Component proportions and performance test results of assembly samples 2-14 and comparative assembly samples 1-6 prepared in Examples 1-14 (E1-E14) and Comparative Examples 1-6 (C1-C6)**

| Example/Comparative Example | | | | | Dynamic shear strength (Mpa) | | |
|---|---|---|---|---|---|---|---|
| | Thermoplastic polymer | Tg (°C) | Mₙ | Thickness of functional layer (µm) | 25°C | 55°C | 80°C |
| E1 | AH645 | 67 | 15,000 | 30 | 12.89 | 5.12 | 0.56 |
| E2 | AH441 | 40 | 12,000 | | 13.90 | 2.88 | 0.17 |
| E3 | AH645/AH441 = 7/3 | 58 | | | 10.85 | 5.44 | 0.74 |
| CE1 | AH353 | 32 | 16,000 | | 10.60 | 0.83 | 0.12 |
| CE2 | AH750 | 70 | 22,000 | | 10.92 | 6.19 | 1.25 |
| E4 | AH645/AH441 = 3/7 | 48 | | | 11.11 | 4.19 | 0.30 |
| CE3 | AH645/AH750 = 6/4 | 68 | | | 12.45 | 5.65 | 1.11 |
| CE4 | AH441/AH353 = 8/2 | 38 | | | 13.24 | 1.13 | 0.17 |
| E5 | AH550 | 53 | 21,000 | 10 | 9.06 | 3.02 | 0.48 |
| E6 | | | | 30 | 10.93 | 3.55 | 0.50 |
| E7 | | | | 40 | 10.42 | 4.29 | 0.53 |
| E8 | | | | 60 | 10.30 | 4.41 | 0.50 |
| E9 | | | | 100 | 3.78 | 4.74 | 0.47 |
| E10 | AH469 | 48 | 23,000 | 10 | 13.78 | 2.47 | 0.49 |
| E11 | | | | 30 | 11.11 | 3.52 | 0.46 |
| E12 | | | | 45 | 12.66 | 3.79 | 0.53 |
| E13 | | | | 60 | 8.56 | 2.37 | 0.45 |
| E15 | BM52 | 60 | 23,000 | 30 | 2.42 | 2.51 | 0.68 |
| CE5 | MB-6-1 | 60 | 67,000 | | 4.63 | 4.08 | 1.85 |
| CE6 | BM260 | 50 | 9,000 | | 1.98 | 1.06 | 0.41 |

As can be seen from the test results shown in Table 2 above, when the assembly samples E1-E14 are prepared according to the technical solution of the present invention, the obtained assembly samples are simple in structure, strong adhesion exists between the functional layer and the heat-conducting structural adhesive layer and between the functional layer and the cooling plate at room temperature (i.e., 25°C) and at the general service temperature (i.e., 55°C) of the power battery of a new energy vehicle, and the disassembly can be performed very easily at the disassembly temperature (i.e., 80°C), thereby greatly improving the efficiency of updating and repairing power batteries of new energy vehicles.

As can be seen from the results of Comparative Example 1 (C1) and Comparative Example 4 (C4), when the glass transition temperature of the thermoplastic polymer in the functional layer is lower than 40°C, the adhesion between the functional layer and the heat-conducting structural adhesive layer and between the functional layer and the cooling plate is insufficient at the general service temperature (i.e., 55°C) of the power battery of a new energy vehicle, and the power battery pack of a new energy vehicle may have a structural failure during use.

As can be seen from the results of Comparative Example 2 (C2) and Comparative Example 3 (C3), when the glass transition temperature of the thermoplastic polymer in the functional layer is higher than 67°C, the adhesion between the functional layer and the heat-conducting structural adhesive layer and between the functional layer and the cooling plate is too large, and when the assembly is disassembled, even if the cooling plate is heated to the disassembly temperature of 80°C, the heat-conducting structural adhesive layer cannot be separated from the cooling plate.

As can be seen from the results of Comparative Example 5 (C5), when the number-average molecular weight of the thermoplastic polymer in the functional layer is too high (greater than 23000), the adhesion between the functional layer and the heat-conducting structural adhesive layer and between the functional layer and the cooling plate is too large, and when the assembly is disassembled, even if the cooling plate is heated to the disassembly temperature of 80°C, the heat-conducting structural adhesive layer cannot be separated from the cooling plate.

As can be seen from the results of Comparative Example 6 (C6), when the number-average molecular weight of the thermoplastic polymer in the functional layer is too small (less than 10000), the adhesion between the functional layer and the heat-conducting structural adhesive layer and between the functional layer and the cooling plate is insufficient at room temperature (i.e., 25°C) and at the general service temperature (i.e., 55°C) of the power battery of a new energy vehicle, and the power battery pack may have a structural failure during use.

It should be noted that although one of the subject matter titles of the present invention is a packaging sheet for a power battery of a new energy vehicle, and the description in the specification is also illustrated by taking the power battery of a new energy vehicle as an example, it can be understood that the use of the packaging sheet of the present invention is not limited to a power battery of a new energy vehicle, but can also be used for other products with similar requirements.

Although specific embodiments have been illustrated and described herein, it will be appreciated by those of ordinary skill in the art that a variety of alternate and/or equivalent implementations may be substituted for the specific embodiments shown and described without departing from the scope of the present invention. It is intended that the present application includes any adaptations or variations of the specific embodiments discussed herein. Therefore, the present invention is limited only by the claims and their equivalents.

It will be understood by those skilled in the art that various modifications and changes may be made without departing from the scope of the present invention. Such modifications and variations are intended to fall within the scope of the present invention as defined in the appended claims.

## Claims

1. A packaging sheet for a power battery of a new energy vehicle, the packaging sheet comprising a functional layer, the functional layer comprising a thermoplastic polymer, and the thermoplastic polymer having a glass transition temperature in a range of 40°C to 67°C and a number-average molecular weight in a range of 10000 to 23000.

2. The packaging sheet for a power battery of a new energy vehicle according to claim 1, wherein the thickness of the functional layer is in a range of 10 µm to 100 µm.

3. The packaging sheet for a power battery of a new energy vehicle according to claim 1, wherein the thermoplastic polymer comprises one or more among thermoplastic copolyester, thermoplastic polyacrylate, thermoplastic polyamide, thermoplastic polyimide, thermoplastic polyether and thermoplastic rubber.

4. The packaging sheet for a power battery of a new energy vehicle according to claim 3, wherein the thermoplastic polymer comprises one or more among thermoplastic copolyester and thermoplastic polyacrylate.

5. The packaging sheet for a power battery of a new energy vehicle according to claim 1, wherein the packaging sheet further comprises an insulating layer laminated with the functional layer.

6. The packaging sheet for a power battery of a new energy vehicle according to claim 5, wherein the thickness of the insulating layer is in a range of 25 µm to 50 µm.

7. The packaging sheet for a power battery of a new energy vehicle according to claim 5, wherein the packaging sheet further comprises a thermosetting polymer layer laminated with the insulating layer on the side opposite to the functional layer.

8. The packaging sheet for a power battery of a new energy vehicle according to claim 5, wherein the packaging sheet further comprises a release layer laminated with the functional layer on the side opposite to the insulating layer.

9. The packaging sheet for a power battery of a new energy vehicle according to claim 1, wherein the packaging sheet further comprises a cooling plate directly adhered to the functional layer.

10. The packaging sheet for a power battery of a new energy vehicle according to claim 5, wherein the packaging sheet further comprises a cooling plate laminated with the insulating layer on the side opposite to the functional layer.

11. The packaging sheet for a power battery of a new energy vehicle according to claim 7, wherein the packaging sheet further comprises a cooling plate laminated with the thermosetting polymer layer on the side opposite to the functional layer.

12. The packaging sheet for a power battery of a new energy vehicle according to any one of claims 9, 10 and 11, wherein the cooling plate is a metal plate.

13. The packaging sheet for a power battery of a new energy vehicle according to claim 12, wherein the cooling plate is an aluminum plate.

14. The packaging sheet for a power battery of a new energy vehicle according to any one of claims 9, 10 and 11, wherein the cooling plate comprises one or more pipes.

15. The packaging sheet for a power battery of a new energy vehicle according to claim 14, wherein the one or more pipes are circulating pipes located inside the cooling plate.

16. A power battery assembly of a new energy vehicle, the power battery assembly of a new energy vehicle comprising:
a battery module;
a heat-conducting structural adhesive layer in contact with the battery module;
a functional layer in contact with the heat-conducting structural adhesive layer; and
a cooling plate adjacent to the functional layer, wherein
the functional layer comprises a thermoplastic polymer, and the thermoplastic polymer has a glass transition temperature in a range of 40°C to 67°C and a number-average molecular weight in a range of 10000 to 23000.

17. The power battery assembly of a new energy vehicle according to claim 16, wherein the thickness of the functional layer is in a range of 10 µm to 100 µm.

18. The power battery assembly of a new energy vehicle according to claim 16, wherein the thermoplastic polymer comprises one or more among thermoplastic copolyester, thermoplastic polyacrylate, thermoplastic polyamide, thermoplastic polyimide, thermoplastic polyether and thermoplastic rubber.

19. The power battery assembly of a new energy vehicle according to claim 18, wherein the thermoplastic polymer comprises one or more among thermoplastic copolyester and thermoplastic polyacrylate.

20. The power battery assembly of a new energy vehicle according to claim 16, wherein the functional layer is directly in contact with the cooling plate.

21. The power battery assembly of a new energy vehicle according to claim 16, wherein the thickness of the heat-conducting structural adhesive layer is in a range of 0.5 mm to 2 mm.

22. The power battery assembly of a new energy vehicle according to claim 16, wherein the cooling plate is a metal plate.

23. The power battery assembly of a new energy vehicle according to claim 16, wherein the cooling plate is an aluminum plate.

24. The power battery assembly of a new energy vehicle according to claim 16, wherein the cooling plate comprises one or more pipes.

25. The power battery assembly of a new energy vehicle according to claim 24, wherein the one or more pipes are circulating pipes located inside the cooling plate.

26. The power battery assembly of a new energy vehicle according to claim 16, wherein the power battery assembly of a new energy vehicle further comprises an insulating layer between the functional layer and the cooling plate and/or an insulating layer between the functional layer and the battery module.

27. The power battery assembly of a new energy vehicle according to claim 26, wherein the thickness of the insulating layer is in a range of 25 µm to 50 µm.

28. A method for disassembling the power battery assembly of a new energy vehicle according to any one of claims 16 to 27, the method comprising:
heating the cooling plate to a range of 70°C to 100°C; and
separating the heat-conducting structural adhesive layer from the cooling plate.

29. The method for disassembling the power battery assembly of a new energy vehicle according to claim 28, wherein the step of heating the cooling plate to a range of 70°C to 100°C comprises:
pumping a heating fluid through the circulating pipes.

30. The method for disassembling the power battery assembly of a new energy vehicle according to claim 29, wherein the heating fluid is water.
